# EUROPEAN PATENT SPECIFICATION

(11) **EP 2 993 588 B1**
(45) Date of publication and mention of the grant of the patent: **30.09.2020**
(21) Application number: 13883671.3
(22) Date of filing: 31.12.2013
(51) Int. Cl.: G06F 13/00, H04L 29/08, H04W 8/24

(54) **METHOD FOR DOWNLOADING FILE, DEVICE AND SYSTEM THEREOF**
VERFAHREN ZUM HERUNTERLADEN VON DATEIEN, VORRICHTUNG UND SYSTEM DAFÜR
PROCÉDÉ DE TÉLÉCHARGEMENT DE FICHIERS, DISPOSITIF ET SYSTÈME

(30) Priority: 28.04.2013 CN 201310156883
(43) Date of publication of application: 09.03.2016
(73) Proprietor: Xiaomi Inc., Beijing 100085 (CN)
(72) Inventor: LIU, Fang, Beijing100085 (CN); YANG, Weixian, Beijing 100085 (CN)
(74) Representative: Cabinet Beau de Loménie
(86) International application number: PCT/CN2013/091075
(87) International publication number: WO 2014/176927

(56) References cited:
- EP-A1- 1 752 886
- WO-A1-2008/120366
- WO-A1-2012/035665
- CN-A- 1 578 222
- CN-A- 1 928 857
- CN-A- 102 624 858
- CN-A- 102 684 989
- CN-A- 103 237 300
- US-A1- 2006 234 684

## Description

### TECHNICAL FIELD

The present disclosure relates to a mobile terminal development technology and, more particularly, to a method for downloading a file, a device and a system thereof.

### BACKGROUND

A mobile terminal has been more commonly used to download files including games, applications, videos and the like. However, due to such problems as band width and power consumption while downloading files through the mobile terminal, the cost is relatively high, and when the file is relatively large, the demands on the quantity of electricity and flow of the mobile terminal are great, and the downloading time is relatively long.

At present, there is no corresponding solution for solving the problem that the time spent for downloading files through the mobile terminal is long.

Document US 2006/234684 A1 discloses a method in which a first mobile terminal connected to a second mobile terminal to download a file from a server, the file being downloaded in segments.

### SUMMARY

The embodiments of the present disclosure provide a method for downloading a file, a device and a system thereof so as to solve the problem that the time spent for downloading files through the mobile terminal is long.

The invention is defined in the independent claims. Further advantages are achieved in embodiments defined in the dependent claims.

It is to be understood that both the foregoing general description and the following detailed description are exemplary and explanatory only and are not restrictive of the present disclosure.

### BRIEF DESCRIPTION OF THE DRAWINGS

Fig. 1 is a first exemplary flow chart of a method for downloading a file provided by embodiments of the present disclosure.
Fig. 2 is an exemplary flow chart of a method for determining a mobile terminal for receiving a file provided by embodiments of the present disclosure.
Fig. 3 is an exemplary flow chart of a method for inquiring a download progress provided by embodiments of the present disclosure.
Fig. 4 is an exemplary flow chart of a method for downloading a file provided by embodiments of the present disclosure.
Fig. 5 is a first block diagram of a device for downloading a file provided by embodiments of the present disclosure.
Fig. 6 is a block diagram of a first determination unit provided by embodiments of the present disclosure.
Fig. 7 is a second block diagram of a device for downloading a file provided by embodiments of the present disclosure.
Fig. 8 is a second exemplary flow chart of a method for downloading a file provided by embodiments of the present disclosure.
Fig. 9 is an exemplary flow chart of a method for sending a subfile to a mobile terminal provided by embodiments of the present disclosure.
Fig. 10 is a third block diagram of a device for downloading a file provided by embodiments of the present disclosure.
Fig. 11 is a block diagram of a third sending unit provided by embodiments of the present disclosure.
Fig. 12 is a fourth exemplary flow chart of a method for downloading a file provided by embodiments of the present disclosure.
Fig. 13 is an exemplary flow chart of a method for a mobile terminal to acquire a file to be downloaded provided by embodiments of the present disclosure.
Fig. 14 is a fourth block diagram of a device for downloading a file provided by embodiments of the present disclosure.
Fig. 15 is a fifth block diagram of a device for downloading a file provided by embodiments of the present disclosure.
Fig. 16 is a block diagram of a system for downloading a file provided by embodiments of the present disclosure.

Specific embodiments in this disclosure have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

### DETAILED DESCRIPTION

Embodiments of the present disclosure provide a method, a device and a system for downloading a file; when a mobile terminal needs to download a file, if there is at least one mobile terminal connected with the mobile terminal which needs to down load a file (i.e., the mobile terminal needing file download), the file may be downloaded through the mobile terminal connected with the mobile terminal needing file download; that is, a server respectively sends subfiles obtained by dividing a file to be downloaded (i.e., a to-be-downloaded file) to each mobile terminal, then the subfiles are acquired from each mobile terminal through the connection between the mobile terminals after the subfiles are downloaded, and the subfiles are merged to obtain the file to be downloaded. Each mobile terminal only needs to download a part of the file to be downloaded, so that the mobile terminal needing file download can download the file within a relatively short time.

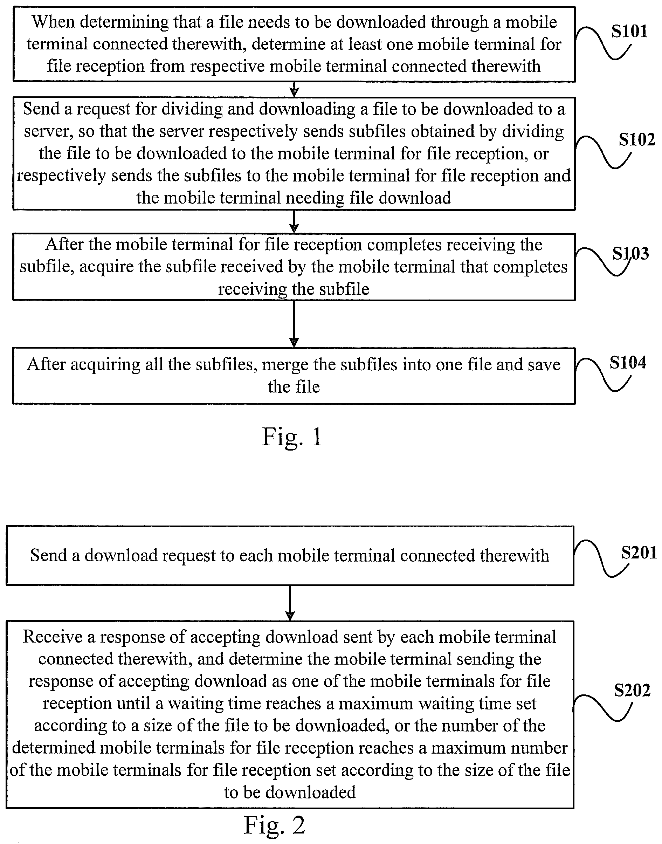

As shown in Fig. 1, embodiments of the present disclosure provide a method for downloading a file, the method is applied in a mobile terminal needing file download, including the following steps.

In step S101, when determining that a file needs to be downloaded through a mobile terminal connected with the mobile terminal needing file download, at least one mobile terminal which is for receiving a file (i.e., mobile terminal for file reception) is determined from respective mobile terminal connected with the mobile terminal needing file download.

In step S102, a request of dividing and downloading a file to be downloaded is sent to a server, so that the server respectively sends subfiles obtained by dividing the file to be downloaded to the mobile terminal for file reception, or respectively sends the subfiles to the mobile terminal for file reception and the mobile terminal needing file download.

In step S103, after the mobile terminal for file reception completes receiving the subfile, the subfile received by the mobile terminal that completes receiving is acquired.

In step S104, after acquiring all the subfiles, the subfiles are merged into one file and saved.

The method for downloading a file provided in Fig. 1 takes the mobile terminal needing file download as an executive body, wherein, each mobile terminal connected with the mobile terminal needing file download may be connected with the mobile terminal needing file download through a wired or wireless manner, thus realizing the resource sharing by the mobile terminals, wherein the wireless connection may be a wireless connection for sharing resources among devices, such as Bluetooth connection or adhoc wifi connection.

When a mobile terminal needs to download a file, if there are multiple mobile terminals connected with the mobile terminal needing file download, the file may be downloaded through the mobile terminals connected with the mobile terminal needing file download. At this moment, the mobile terminal needing file download may determine at least one mobile terminal for file reception from the mobile terminals connected therewith.

After the mobile terminal needing file download sends a request of dividing and downloading a file to be downloaded to the server, the server sends subfiles obtained by dividing the file to be downloaded to the mobile terminal for file reception, or sends the subfiles to the mobile terminal for file reception and the mobile terminal needing file download; for example, when a band width of the mobile terminal needing file download is narrow, in order to quicken the download speed, the mobile terminal needing file download may not receive the file, and the file can be received by the mobile terminal for file reception only.

After the mobile terminal for file reception completes receiving the subfile, the mobile terminal needing file download may acquire the subfile received by the mobile terminal that completes receiving, and after acquiring all the subfiles, the mobile terminal needing file download merges the subfiles into one file and saves the file, thus downloading the file. Since each mobile terminal only needs to download one subfile, the mobile terminal needing file download can download the file within a relatively short time.

As shown in Fig. 2, the step S101 may be the following steps.

In step S201, a download request is sent to each mobile terminal connected with the mobile terminal needing file download.

In step S202, a response of accepting download sent by each mobile terminal connected with the mobile terminal needing file download is received, and the mobile terminal sending the response of accepting download is determined as one of the mobile terminals for file reception until a waiting time reaches a maximum waiting time set according to a size of the file to be downloaded, or the number of the determined mobile terminals for file reception reaches the maximum number of the mobile terminals for file reception set according to the size of the file to be downloaded.

Certainly, those skilled in the art may adopt other feasible manners to determine at least one mobile terminal for file reception from respective mobile terminals connected with the mobile terminal needing file download, only one embodiment is provided herein, and other feasible manners will not be elaborated one by one.

Further, different mobile terminals have different performances and band widths, the download speed of the mobile terminal having a better performance is faster than that of the mobile terminal having a poorer performance, and the download speed of the mobile terminal having a relatively wide band width is faster than that of the mobile terminal having a relatively narrow band width; therefore, when dividing the file to be downloaded and distributing a download task, the device performance and the band width of each mobile terminal for file reception needs to be considered. In practical applications, the request of dividing and downloading the file to be downloaded may carry therein a proportional relation of sizes of the subfiles after dividing which is determined according to the size of the file to be downloaded as well as the device performance and the band width of the mobile terminal for file reception, and a download mapping relation between the subfiles after dividing and the mobile terminal for file reception which is determined according to the size of the file to be downloaded as well as the device performance and the band width of the mobile terminal for file reception.

The server respectively sends the subfiles obtained by dividing the file to be downloaded to the mobile terminal for file reception, or respectively sends the subfiles to the mobile terminal for file reception and the mobile terminal needing file download, which may be:
the server divides the file to be downloaded into subfiles according to the proportional relation of the sizes of the subfiles after dividing, and sends each subfile to its corresponding mobile terminal in the download mapping relation, the number of the subfiles being the same as that of the mobile terminals for file reception.

For example, there are three mobile terminals for file reception, one mobile terminal having a better performance and a wider band width, and the other two mobile terminals having poorer performances and narrower band widths, when dividing the file to be downloaded, the file to be downloaded may be divided into a big subfile and two small subfiles, and the big subfile may be distributed to the mobile terminal having a better performance for download, and the two small subfiles may be respectively distributed to the two mobile terminals having poorer performances for download.

Further, when dividing the file to be downloaded, if the file to be downloaded is a video file and the subfiles after dividing are video segments, then the file to be downloaded may be divided according to the time of the video file after determining the proportional relation of the sizes of the subfiles after dividing, wherein one implementation manner is as follows: the server may determine a starting time point and an ending time point corresponding to each video file segment to be intercepted according to the proportional relation of the sizes of the subfiles after dividing, and further determine a time stamp of a video frame and/or an audio frame which is corresponding to the starting time point and the ending time point of each video file segment to be intercepted and saved in the video file, wherein the time stamp of the video frame and/or the audio frame refers to the time point corresponding to the video frame and/or the audio frame in the video file; then acquire a displacement position of the video frame and/or the audio frame corresponding to the starting time point and the ending time point of each video file segment to be intercepted in the video file, according to a corresponding relationship between the time stamp of the video frame and/or the audio frame saved in the video file and the displacement position of the video frame and/or the audio frame in the video file; and then the server may acquire data of the video frame and/or the audio frame of the video segment between the starting time point and the ending time point of each video file segment to be intercepted, according to the displacement position of the video frame and/or the audio frame corresponding to the starting time point and the ending time point of each video file segment to be intercepted in the video file, thus obtaining each video file segment to be intercepted.

For example, in order to ensure the entire download progress and improve the entire download smoothness, after sending the request of dividing and downloading a file to be downloaded to the server, the method further includes:
when determining that a download speed of one mobile terminal for file reception is too slow or determining that a connection between one mobile terminal for file reception and the mobile terminal needing file download is poor, an instruction for terminating download is sent to the mobile terminal for file reception which has too slow download speed or poor connection, and the subfile corresponding to this mobile terminal for file reception is determined as a new file to be downloaded.

In practical applications, a download time may be set for each mobile terminal for file reception. When reaching the download time, a download progress inquiring request is sent to each mobile terminal for file reception; if receiving a response of too slow download speed or not receiving a response from a certain mobile terminal for file reception within a set time, then the download speed of this mobile terminal is determined to be too slow, and an instruction for terminating download is sent to terminate the download of this mobile terminal, and the subfile corresponding to this mobile terminal is determined as a new file to be downloaded and will be downloaded again.

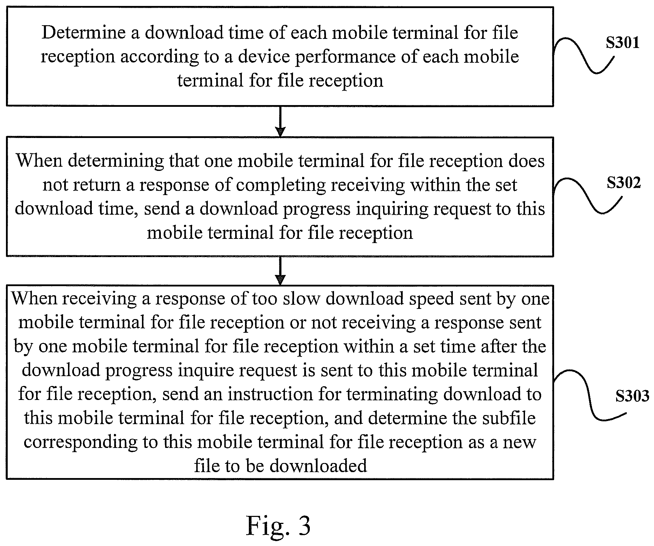

As shown in Fig. 3, when determining that the download speed of the mobile terminal for file reception is too slow or determining that the connection between the mobile terminal for file reception and the mobile terminal needing file download is poor, sending an instruction for terminating download to the mobile terminal for file reception which has too slow download speed or poor connection, and determining the subfile corresponding to the mobile terminal for file reception as the new file to be downloaded includes the following steps.

In step S301, a download time of each mobile terminal for file reception is determined according to a device performance of each mobile terminal for file reception.

In step S302, when determining that one mobile terminal for file reception does not return a response of completing receiving within the set download time, a download progress inquiring request is sent to this mobile terminal for file reception.

In step S303, when receiving the response of too slow download speed sent by the mobile terminal for file reception or not receiving the response sent by the mobile terminal for file reception within the set time after the download progress inquiring request is sent to the mobile terminal for file reception, the instruction for terminating download is sent to the mobile terminal for file reception, and the subfile corresponding to the mobile terminal for file reception is determined as the new file to be downloaded.

Certainly, those skilled in the art may employ other feasible manners to ensure the entire download speed, which will not be elaborated one by one here.

After the new file to be downloaded is determined in step S303, the mobile terminal needing file download may launch to download the new file to be downloaded, for example, a manner for downloading the new file to be downloaded may be determined according to the size of the new file to be downloaded. If the new file to be downloaded is relative large, for example, the byte number of the file is larger than the set minimum byte number of a file needing to be downloaded through the mobile terminal connected with the mobile terminal needing file download, then it may be determined that the file needs to be downloaded through the mobile terminal connected with the mobile terminal needing file download, so that the file needs to be downloaded through the method provided by embodiments of the present disclosure, and the mobile terminal which sends a response of too slow download speed and the mobile terminal which does not send a response within the set time after receiving the progress inquiry request are not used for download. If the new file to be downloaded is relatively small, for example, the byte number of the file is smaller than the set minimum byte number of the file needing to be downloaded through the mobile terminal connected with the mobile terminal needing file download, then the new file to be downloaded may be downloaded directly through the mobile terminal needing file download.

Certainly, those skilled in the art may employ other feasible manners to download the new file to be downloaded, which will not be elaborated one by one here.

In practical applications, a response of completing receiving may be sent by the mobile terminal for file reception that completes receiving to the mobile terminal needing file download, so that the mobile terminal needing file download determines that the mobile terminal for file reception completes receiving. Then the step S103 may be:
after receiving the response of completing receiving sent by the mobile terminal for file reception, the subfile received by the mobile terminal sending the response of completing receiving is acquired.

Further, in order to enable each mobile terminal for file reception to acquire the subfiles downloaded by other mobile terminal for file reception, the mobile terminal needing file download, after acquiring the subfiles received by all the mobile terminals for file reception, may notify each mobile terminal for file reception of the mobile terminals receiving other subfiles and an arrangement sequence of each subfile in the file to be downloaded, so that each mobile terminal for file reception may also acquire all the subfiles and merge the subfiles into one file.

In practical applications, after the mobile terminal needing file download acquires all the subfiles, the method for downloading a file provided by embodiments of the present disclosure further includes:
sending a notification message carrying mobile terminal information corresponding to each subfile and an arrangement sequence of each subfile in the file to be downloaded to each mobile terminal for file reception, and when determining that the file needs to be received, respective mobile terminals for file reception acquire all the subfiles, merges the subfiles into one file and saves the file according to the notification message.

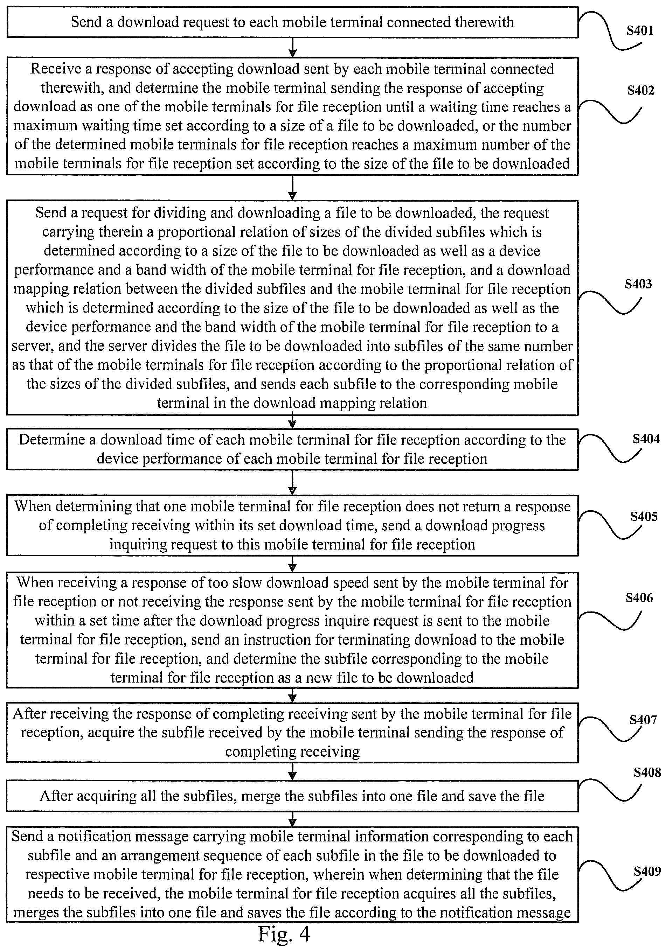

As shown in Fig. 4, embodiments of the present disclosure provide a method for downloading a file, including the following steps.

In step S401, a download request is sent to each mobile terminal connected therewith.

In step S402, a response of accepting download sent by each mobile terminal connected therewith is received, and the mobile terminal sending the response of accepting download is determined as one of the mobile terminals for file reception until a waiting time reaches a maximum waiting time set according to a size of the file to be downloaded, or the number of the determined mobile terminals for file reception reaches a maximum number of the mobile terminals for file reception set according to the size of the file to be downloaded.

In step S403, a request of dividing and downloading a file to be downloaded is sent to a server, the request carrying a proportional relation of sizes of the subfiles after dividing which is determined according to the size of the file to be downloaded as well as a device performance and a band width of the mobile terminal for file reception, and a download mapping relation between the subfiles after dividing and the mobile terminal for file reception which is determined according to the size of the file to be downloaded as well as the device performance and the band width of the mobile terminal for file reception, so that the server divides the file to be downloaded into subfiles according to the proportional relation of the sizes of the subfiles after dividing, and sends each subfile to its corresponding mobile terminal in the download mapping relation, the subfiles being the same number as that of the mobile terminals for file reception.

In step S404, a download time of each mobile terminal for file reception is determined according to the device performance of each mobile terminal for file reception.

In step S405, when determining that one mobile terminal for file reception does not return a response of completing receiving within the set download time, a download progress inquiring request is sent to the mobile terminal for file reception.

In step S406, when receiving the response of too slow download speed sent by the mobile terminal for file reception or not receiving the response sent by the mobile terminal for file reception within the set time after the download progress inquiring request is sent to the mobile terminal for file reception, an instruction for terminating download is sent to the mobile terminal for file reception, and the subfile corresponding to the mobile terminal for file reception is determined as a new file to be downloaded.

In step S407, after receiving the response of completing receiving sent by the mobile terminal for file reception, the subfile received by the mobile terminal sending the response of completing receiving is acquired.

In step S408, after acquiring all the subfiles, the subfiles are merged into one file and saved.

In step S409, a notification message carrying mobile terminal information corresponding to each subfile and an arrangement sequence of each subfile in the file to be downloaded is sent to each mobile terminal for file reception, and when determining that the file needs to be received, respective mobile terminal for file reception acquires all the subfiles, merges the subfiles into one file and saves the file according to the notification message.

Through dividing the file to be downloaded into subfiles, downloading the subfiles by the mobile terminals that are mutually connected, and after downloading, acquiring the subfiles from the mobile terminal connected therewith, merging the subfiles into one file and saving the file, the mobile terminal may complete downloading the file within a relatively short time.

When dividing and downloading the file to be downloaded according to the proportional relation of the sizes of the subfiles after dividing which is determined according to the size of the file to be downloaded as well as the device performance, and the band width of the mobile terminal for file reception and the download mapping relation between the subfiles after dividing and the mobile terminal for file reception, the file is divided according to the proportional relation of the sizes of the subfiles after dividing and a download task is distributed according to the download mapping relation, which may quicken the entire download progress, and realize rational utilization of resources.

When receiving the response of too slow download speed sent by the mobile terminal for file reception or not receiving the response sent by the mobile terminal for file reception within the set time after the download progress inquiring request is sent to the mobile terminal for file reception, the instruction for terminating download is sent to the mobile terminal for file reception, and the subfile corresponding to the mobile terminal for file reception is determined as the new file to be downloaded, which may quicken the entire download speed.

After acquiring all the subfiles, the notification message carrying the mobile terminal information corresponding to each subfile and the arrangement sequence of each subfile in the file to be downloaded is sent to each mobile terminal for file reception, which may be convenient for the mobile terminal for file reception, when determining that the file to be downloaded needs to be received, to acquire all the subfiles, merge the subfiles into one file and save the file according to the notification message.

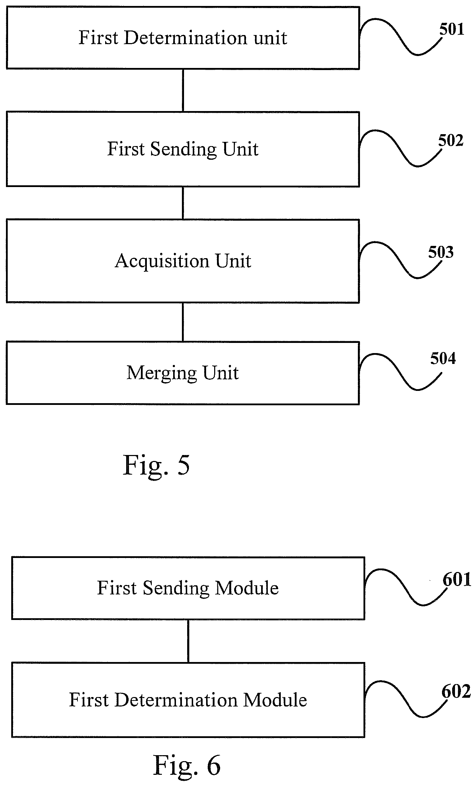

As shown in Fig. 5, embodiments of the present disclosure provide a device for downloading a file, including:
a first determination unit 501 configured to, when determining that a file needs to be downloaded through a mobile terminal connected therewith, determine at least one mobile terminal for file reception from respective mobile terminals connected therewith;
a first sending unit 502 configured to send a request of dividing and downloading a file to be downloaded to a server, so that the server respectively sends subfiles obtained by dividing the file to be downloaded to the mobile terminal for file reception, or respectively sends the subfiles to the mobile terminal for file reception and a mobile terminal needing file download;
an acquisition unit 503 configured to, after the mobile terminal for file reception completes receiving the subfile, acquire the subfile received by the mobile terminal that completes receiving; and
a merging unit 504 configured to, after acquiring all the subfiles, merge the subfiles into one file and save the file.

When a mobile terminal needs to download a file, if there is at least one mobile terminal connected with the mobile terminal which needs to download a file (i.e., the mobile terminal needing file download), the file may be downloaded through the mobile terminals connected with the mobile terminal needing file download. At this time, the mobile terminal needing file download may determine at least one mobile terminal for file reception from the mobile terminals connected therewith.

After the mobile terminal needing file download sends the request of dividing and downloading a file to be downloaded to the server, the server respectively sends the subfiles obtained by dividing the file to be downloaded to the mobile terminal for file reception, or respectively sends the subfiles to the mobile terminal for file reception and the mobile terminal needing file download; for example, when a band width of the mobile terminal needing file download is narrow, in order to quicken the download speed, the mobile terminal needing file download may not receive the file, and the file can be received by the mobile terminal for file reception only.

After the mobile terminal for file reception completes receiving, the mobile terminal needing file download may acquire the subfile received by the mobile terminal that completes receiving, and after acquiring all the subfiles, the mobile terminal needing file download merges the subfiles into one file and saves the file, thus downloading the file. Since each mobile terminal only needs to download one subfile, the mobile terminal needing file download can download the file within a relatively short time.

Wherein, each mobile terminal connected with the mobile terminal needing file download may be connected with the dispatch mobile terminal through a wired or wireless manner, thus realizing resource sharing by the mobile terminals, wherein the wireless connection may be a wireless connection for sharing resources among devices, such as Bluetooth or adhoc wifi.

In practical applications, the mobile terminal needing file download may receive the subfiles together with the mobile terminal for file reception. For example, in order to reduce the treatment capacity of a system and quicken the download speed, the mobile terminal needing file download may only be responsible for determining the mobile terminal for file reception and sending the request of dividing and downloading the file to be downloaded to the system without receiving the subfiles.

As shown in Fig. 6, the first determination unit 501 includes:
a first sending module 601 configured to, when determining that a file needs to be downloaded through a mobile terminal connected therewith, send a download request to each mobile terminal connected therewith; and
a first determination module 602 configured to receive a response of accepting download sent by each mobile terminal connected therewith, and determine the mobile terminal sending the response of accepting download as one of the mobile terminals for file reception until a waiting time reaches a maximum waiting time set according to a size of the file to be downloaded, or the number of the determined mobile terminals for file reception reaches a maximum number of the mobile terminals for file reception set according to the size of the file to be downloaded.

Certainly, those skilled in the art may employ other feasible manners to realize the first determination unit 501, which will not be elaborated one by one here.

Further, different mobile terminals have different performances and band widths, the download speed of the mobile terminal having a better performance is faster than that of the mobile terminal having a poorer performance, and the download speed of the mobile terminal having a wider band width is faster than that of the mobile terminal having a narrower band width; therefore, when dividing the file to be downloaded and distributing a download task, the device performance and the band width of each mobile terminal for file reception need to be considered. In practical applications, a request of dividing and downloading a file to be downloaded may carry a proportional relation of sizes of the subfiles after dividing which is determined according to the size of the file to be downloaded as well as the device performance and the band width of the mobile terminal for file reception, and a download mapping relation between the subfiles after dividing and the mobile terminal for file reception which is determined according to the size of the file to be downloaded as well as the device performance and the band width of the mobile terminal for file reception.

The server respectively sends the subfiles obtained by dividing the file to be downloaded to the mobile terminal for file reception, or respectively sends the subfiles to the mobile terminal for file reception and the mobile terminal needing file download, which may be:
the server divides the file to be downloaded into subfiles according to the proportional relation of the sizes of the subfiles after dividing, and sends each subfile to the corresponding mobile terminal in the download mapping relation, the number of the subfiles being the same as that of the mobile terminals for file reception.

For example, in order to ensure the entire download progress and improve the entire download smoothness, the device provided in Fig. 5 further includes:
a second determination unit configured to, when determining that a download speed of one mobile terminal for file reception is too slow or determining that a connection between one mobile terminal for file reception and the mobile terminal needing file download is poor, send an instruction for terminating download to the mobile terminal for file reception which has too slow download speed or poor connection, and determine the subfile corresponding to the mobile terminal for file reception as a new file to be downloaded.

In practical applications, a download time may be set for each mobile terminal for file reception. When reaching the download time, a download progress inquiring request is sent to each mobile terminal for file reception; if receiving a response of too slow download or not receiving a response from a certain mobile terminal for file reception within a set time, then the download speed of this mobile terminal is determined to be too slow, and an instruction for terminating download is sent to terminate the download of this mobile terminal, and the subfile corresponding to this mobile terminal is determined as a new file to be downloaded and will be downloaded again.

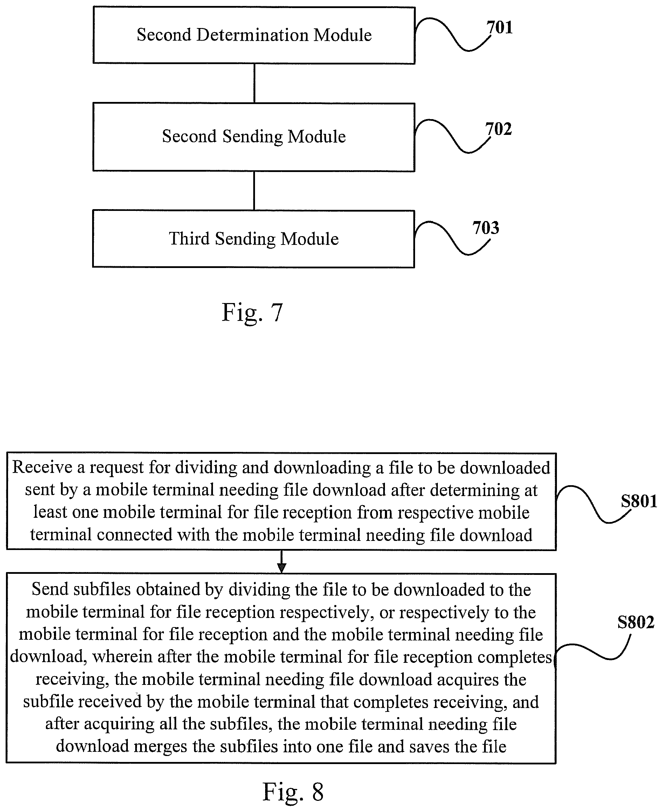

Then as shown in Fig. 7, the second determination unit includes:
a second determination module 701 configured to determine a download time of each mobile terminal for file reception according to a device performance of each mobile terminal for file reception;
a second sending module 702 configured to, when determining that one mobile terminal for file reception does not return a response of completing receiving within the set download time, send a download progress inquiring request to the mobile terminal for file reception; and
a third sending module 703 configured to, when receiving a response of too slow download speed sent by one mobile terminal for file reception or not receiving a response sent by the mobile terminal for file reception within a set time after the download progress inquiring request is sent to the mobile terminal for file reception, send an instruction for terminating download to the mobile terminal for file reception, and determine the subfile corresponding to the mobile terminal for file reception as a new file to be downloaded.

Certainly, those skilled in the art may employ other feasible manners to ensure the entire download progress, which will not be elaborated one by one here.

Wherein, after the new file to be downloaded is determined by the third sending module 703, the mobile terminal needing file download may launch to download the new file to be downloaded, for example, the manner for downloading the new file to be downloaded may be determined according to the size of the new file to be downloaded. If the new file to be downloaded is relatively large, for example, the byte number of the file is larger than the set minimum byte number of a file needing to be downloaded through the mobile terminal connected with the mobile terminal needing file download, then it may be determined that the file needs to be downloaded through the mobile terminal connected with the mobile terminal needing file download, so that the file needs to be downloaded through the method provided by embodiments of the present disclosure, and the mobile terminal which sends a response of too slow download speed and the mobile terminal which does not send a response within the set time after receiving the progress inquiry request are not used for download. If the new file to be downloaded is relatively small, for example, the byte number of the file is smaller than the set minimum byte number of the file needing to be downloaded through the mobile terminal connected with the mobile terminal needing file download, then the new file to be downloaded may be downloaded directly through the mobile terminal needing file download.

Certainly, those skilled in the art may employ other feasible manners to download the new file to be downloaded, which will not be elaborated one by one here.

In practical applications, a response of completing receiving may be sent by the mobile terminal for file reception that completes receiving to the mobile terminal needing file download, so that the mobile terminal needing file download determines that the mobile terminal for file reception completes receiving. Then the acquisition unit may be configured to:
after receiving the response of completing receiving sent by the mobile terminal for file reception, acquire the subfile received by the mobile terminal sending the response of completing receiving.

Further, in order to enable each mobile terminal for file reception to acquire the subfiles downloaded by other mobile terminal for file reception, the mobile terminal needing file download, after acquiring the subfiles received by all the mobile terminals for file reception, may notify each mobile terminal for file reception of the mobile terminals receiving other subfiles and an arrangement sequence of each subfile in the file to be downloaded, so that each mobile terminal for file reception may also acquire all the subfiles and merge the subfiles into one file.

In practical applications, the device for downloading a file provided by embodiments of the present disclosure further includes:
a fourth sending unit configured to send a notification message carrying mobile terminal information corresponding to each subfile and an arrangement sequence of each subfile in the file to be downloaded to each mobile terminal for file reception, wherein when determining that the file needs to be received, acquires all the subfiles, merges the subfiles into a file and saves the file according to the notification message.

Embodiments of the present disclosure also provide a method for downloading a file at a server side, as shown in Fig. 8, the method includes the following steps.

In step S801, a request of dividing and downloading a file to be downloaded, sent by a mobile terminal needing file download after determining at least one mobile terminal for file reception from respective mobile terminal connected with the mobile terminal needing file download, is received.

In step S802, subfiles obtained by dividing the file to be downloaded are respectively sent to the mobile terminal for file reception, or respectively sent to the mobile terminal for file reception and the mobile terminal needing file download, wherein after the mobile terminal for file reception completes receiving, the mobile terminal needing file download acquires the subfile received by the mobile terminal that completes receiving, and after acquiring all the subfiles, the mobile terminal needing file download merges the subfiles into one file and saves the file.

Further, different mobile terminals have different performances and band widths, the download speed of the mobile terminal having a better performance is faster than that of the mobile terminal having a poorer performance, and the download speed of the mobile terminal having a relatively wide band width is faster than that of the mobile terminal having a relatively narrow band width; therefore, when dividing the file to be downloaded and distributing a download task, the device performance and the band width of each mobile terminal for file reception needs to be considered. In practical applications, the request of dividing and downloading the file to be downloaded may carry therein a proportional relation of sizes of the subfiles after dividing which is determined according to the size of the file to be downloaded as well as the device performance and the band width of the mobile terminal for file reception, and a download mapping relation between the subfiles after dividing and the mobile terminal for file reception which is determined according to the size of the file to be downloaded as well as the device performance and the band width of the mobile terminal for file reception.

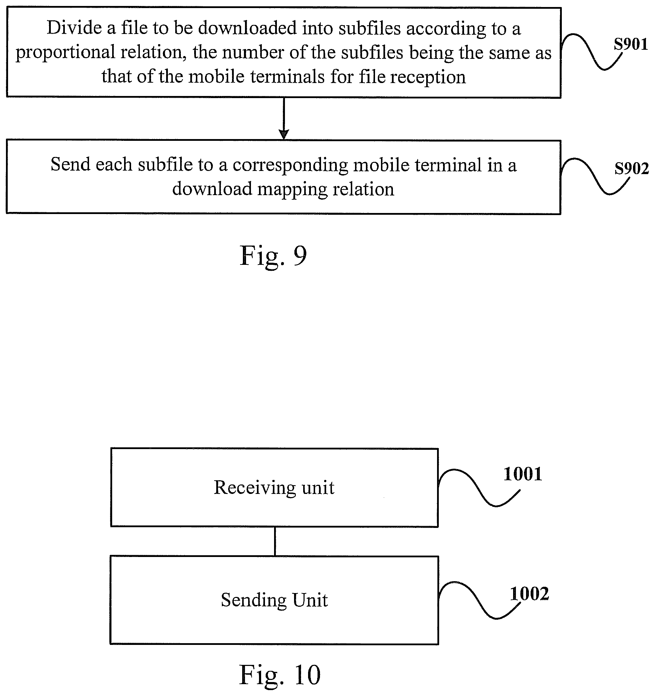

Then as shown in Fig. 9, the sending the subfiles obtained by dividing the file to be downloaded to the mobile terminal for file reception, or respectively sending the subfiles to the mobile terminal for file reception and the mobile terminal needing file download include the following steps.

In step S901, a file to be downloaded is divided into subfiles according to a proportional relation, the number of the subfiles being the same as that of the mobile terminals for file reception.

In step S902, each subfile is sent to a mobile terminal corresponding thereto in a download mapping relation.

Corresponding to the method for downloading a file provided in Fig. 8, embodiments of the present disclosure provide a device for downloading a file, as shown in Fig. 10, including:
a receiving unit 1001 configured to receive a request of dividing and downloading a file to be downloaded sent by a mobile terminal needing file download after determining at least one mobile terminal for file reception from respective mobile terminal connected with the mobile terminal needing file download; and
a sending unit 1002 configured to respectively send subfiles obtained by dividing the file to be downloaded to the mobile terminal for file reception, or respectively send the subfiles to the mobile terminal for file reception and the mobile terminal needing file download, wherein the mobile terminal needing file download, after the mobile terminal for file reception completes receiving the subfile, acquires the subfile received by the mobile terminal that completes receiving, and after acquiring all the subfiles, merges the subfiles into one file and saves the file.

Further, different mobile terminals have different performances and band widths, the download speed of the mobile terminal having a better performance is faster than that of the mobile terminal having a poorer performance, and the download speed of the mobile terminal having a relatively wide band width is faster than that of the mobile terminal having a relatively narrow band width; therefore, when dividing the file to be downloaded and distributing a download task, the device performance and the band width of each mobile terminal for file reception needs to be considered. In practical applications, the request of dividing and downloading the file to be downloaded may carry therein a proportional relation of sizes of the subfiles after dividing which is determined according to the size of the file to be downloaded as well as the device performance and the band width of the mobile terminal for file reception, and a download mapping relation between the subfiles after dividing and the mobile terminal for file reception which is determined according to the size of the file to be downloaded as well as the device performance and the band width of the mobile terminal for file reception.

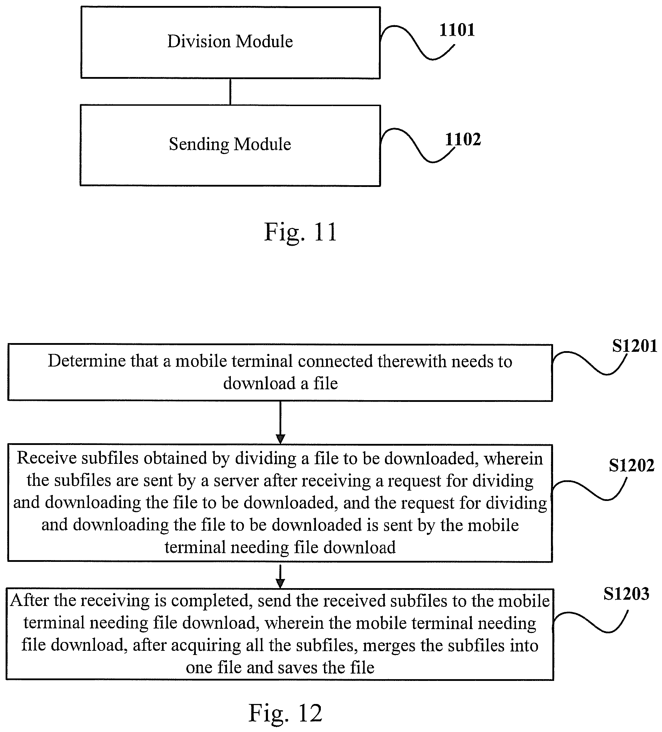

Then as shown in Fig. 11, the third sending unit 1002 includes:
a division module 1101 configured to divide the file to be downloaded into subfiles according to the proportional relation of the file, the number of the subfiles being the same as that of the mobile terminals for file reception; and
a sending module 1102 configured to send each subfile to the corresponding mobile terminal in the download mapping relation.

As shown in Fig. 12, embodiments of the present disclosure also provides a method for downloading a file at a side of a mobile terminal for file reception, which is applied in a mobile terminal, including the following steps.

In step S1201, a mobile terminal connected therewith is determined to need to download a file.

In step S1202, subfiles obtained by dividing a file to be downloaded are received, wherein the subfiles are sent by a server after receiving a request of dividing and downloading the file to be downloaded, and the request of dividing and downloading the file to be downloaded is sent by the mobile terminal needing file download.

In step S1203, after completing receiving the subfile, the received subfile is sent to the mobile terminal needing file download, wherein after acquiring all the subfiles, the mobile terminal needing file download merges the subfiles into a file and saves the file.

Further, in order to enable each mobile terminal for file reception to acquire the subfiles downloaded by other mobile terminal for file reception, the mobile terminal needing file download, after acquiring the subfiles received by all the mobile terminals for file reception, may notify each mobile terminal for file reception of the mobile terminals receiving other subfiles and an arrangement sequence of each subfile in the file to be downloaded. In this way, each mobile terminal for file reception may also acquire all the subfiles and merge the subfiles into one file.

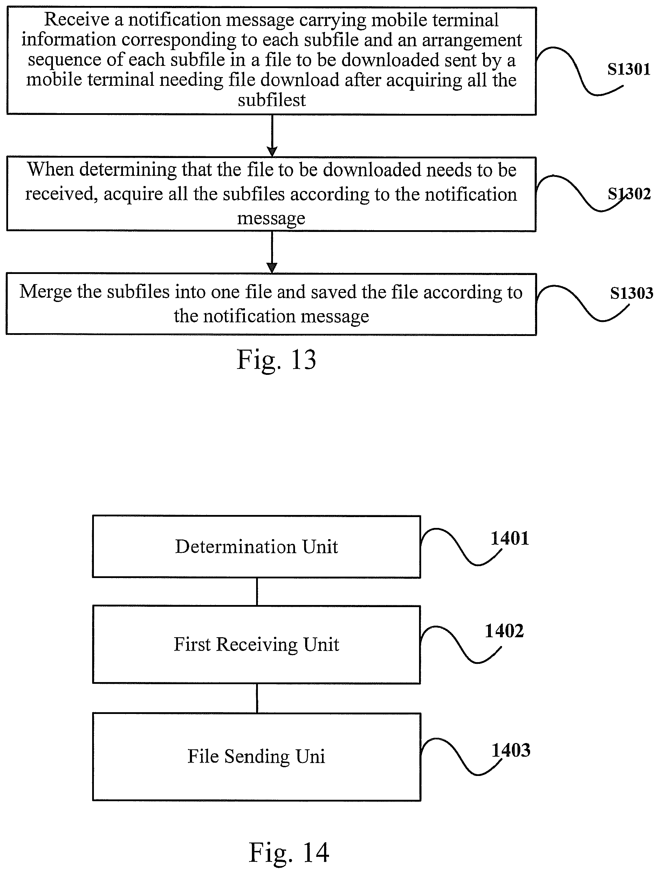

Then as shown in Fig. 13, the method for downloading a file provided in Fig. 12 further includes the following steps.

In step S1301, a notification message carrying mobile terminal information corresponding to each subfile and an arrangement sequence of each subfile in the file to be downloaded sent by the mobile terminal needing file download after acquiring all the subfiles is received.

In step S1302, when determining that the file to be downloaded needs to be received, all the subfiles are acquired according to the notification message.

In step S1303, the subfiles are merged into one file and saved according to the notification message.

As shown in Fig. 14, embodiments of the present disclosure provide a device for downloading a file corresponding to the method for downloading a file in Fig. 12, including:
a determination unit 1401 configured to determine that a mobile terminal connected therewith needs to download a file;
a first receiving unit 1402 configured to receive subfiles obtained by dividing a file to be downloaded, wherein the subfiles are sent by a server after receiving a request of dividing and downloading the file to be downloaded, and the request of dividing and downloading the file to be downloaded is sent by the mobile terminal needing file download; and
a file sending unit 1403 configured to, after completing receiving the subfile, send the received subfile to the mobile terminal needing file download, wherein the mobile terminal needing file download, after acquiring all the subfiles, merges the subfiles into a file and saves the file.

In order to enable each mobile terminal for file reception to acquire the subfiles downloaded by other mobile terminal for file reception, the mobile terminal needing file download, after acquiring the subfiles received by all the mobile terminals for file reception, may notify each mobile terminal for file reception of the mobile terminals receiving other subfiles and an arrangement sequence of each subfile in the file to be downloaded. In this way, each mobile terminal for file reception may also acquire all the subfiles and merge the subfiles into one file.

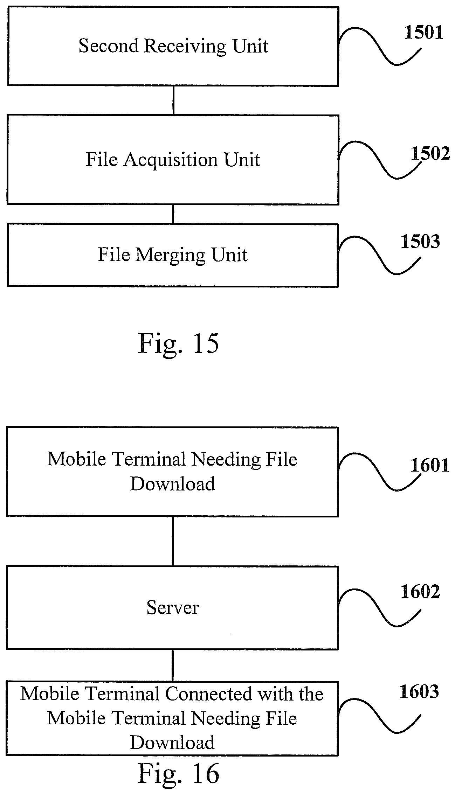

Then as shown in Fig. 15, the device for downloading a file provided in Fig. 14 further includes:
a second receiving unit 1501 configured to receive a notification message carrying mobile terminal information corresponding to each subfile and an arrangement sequence of each subfile in the file to be downloaded sent by the mobile terminal needing file download after acquiring all the subfiles;
a file acquisition unit 1502 configured to, when determining that the file to be downloaded needs to be received, acquire all the subfiles according to the notification message; and
a file merging unit 1503 configured to, after acquiring all the subfiles, merge the subfiles into one file and save the file.

As shown in Fig. 16, embodiments of the present disclosure provide a system for downloading a file, including:
a mobile terminal needing file download 1601 configured to determine at least one mobile terminal for file reception from respective mobile terminal connected with the mobile terminal needing file download; send a request of dividing and downloading a file to be downloaded to a server; after the mobile terminal for file reception completes receiving the subfile, acquire the subfile received by the mobile terminal that completes receiving; and after acquiring all the subfiles, merge the subfiles into one file and save the file;
a server 1602 configured to, after receiving the request of dividing and downloading the file to be downloaded, respectively send the subfiles obtained by dividing the file to be downloaded to the mobile terminal for file reception, or respectively send the subfiles to the mobile terminal for file reception and the mobile terminal needing file download; and
a mobile terminal 1603 connected with the mobile terminal needing file download, configured to determine that the mobile terminal connected therewith needs to download a file, receive the subfiles obtained by dividing the file to be downloaded sent by the server after receiving the request of dividing and downloading the file to be downloaded which is sent by the mobile terminal needing file download, and send the received subfiles to the mobile terminal needing file download after completing receiving, wherein the mobile terminal needing file download, after acquiring all the subfiles, merges the subfiles into one file and saves the file.

Embodiments of the present disclosure provide a method, a device and a system for downloading a file; when a mobile terminal needs to download a file, if there is a mobile terminal connected with the mobile terminal needing file download, the file may be downloaded through the mobile terminal connected with the mobile terminal needing file download; that is, a server respectively sends subfiles obtained by dividing a to-be-downloaded file to each mobile terminal, then the subfiles are acquired from each mobile terminal through the connection between the mobile terminals after the subfiles are downloaded, and the subfiles are merged to obtain the to-be-downloaded file. Each mobile terminal only needs to download a part of the to-be-downloaded file, so that the mobile terminal can download the file by spending a relatively short time.

It should be appreciated by those skilled in this art that the embodiments of the disclosure may be provided in the form of a method, system or a computer program product. Therefore, the embodiments of the disclosure may be realized by complete hardware embodiments, complete software embodiments, or software-hardware combined embodiments. Moreover, the disclosure may be realized in the form of a computer program product that is applied to one or more computer-usable storage mediums (including, but not limited to disk memory, CD-ROM or optical memory) in which computer-usable program codes are contained.

The disclosure is illustrated with reference to the flow chart and/or the block diagram of the method, device (system) and computer program product according to the embodiments of the disclosure. It should be appreciated that each flow in the flow chart and/or each block in the block diagram and/or the combination of the flows in the flow chart and the blocks in the block diagram may be realized by computer program instructions. These computer program instructions may be provided to a general-purpose computer, a special purpose computer, an embedded processor or processors of other programmable data processing devices to generate a machine which makes the instructions executed by the processors of the computers or the processors of other programmable data processing devices generate a device for realizing the functions specified in one or more flows of the flow chart or one or more blocks in the block diagram.

These computer program instructions may also be stored in a computer-readable memory which is capable of guiding a computer or another programmable data processing device to work in a given manner, thereby enabling the instructions stored in the computer-readable memory to generate a product including an instruction device for realizing the functions specified in one or more flows of the flow chart or one or more blocks in the block diagram.

These computer program instructions may also be loaded to a computer or other programmable data processing devices to execute a series of operations thereon to generate the processing realized by the computer, so that the instructions executed by the computer or other programmable data processing devices offer the steps for realizing the functions specified in one or more flows of the flow chart or one or more blocks in the block diagram.

While preferred embodiments have been described herein, variations and modifications may be made on these embodiments once those skilled in the art know the basic creative concept of the disclosure.

## Claims

1. A method for downloading a file, **characterized in that**, the method is applied in a first mobile terminal which needs to download a file, comprising:
determining (S101) at least one second mobile terminal for receiving a file among a plurality of mobile terminals connectable to the first mobile terminal;
sending (S102, S403) a request of dividing and downloading a to-be-downloaded file to a server, so that the server divides the to-be-downloaded file into a plurality of subfiles and sends the plurality of subfiles to said at least one second mobile terminal respectively, or respectively sends the plurality of subfiles to said at least one second mobile terminal and the first mobile terminal, each said second mobile terminal receiving part of said file to be downloaded;
when determining that a download speed of one said second mobile terminal is too slow or that a connection between one said second mobile terminal and the first mobile terminal is poor, sending an instruction of terminating download to this second mobile terminal, and determining the subfile corresponding to this second mobile terminal as a new to-be-downloaded file,
after said at least one second mobile terminal completes receiving of the subfile, acquiring (S103, S407) the subfile received by this second mobile terminal; and
after all of the plurality of subfiles are acquired, merging the subfiles into one file and saving the file (S104, S408).

2. The method according to claim 1, **characterized in that**, the step of determining (S101) at least one second mobile terminal among the plurality of mobile terminals connectable with the first mobile terminal comprises:
sending (S201, S401) a download request to respective mobile terminals connectable with the first mobile terminal; and
receiving a response of accepting download sent by respective mobile terminal connectable with the first mobile terminal, and determining the mobile terminal sending the response of accepting download as one of said at least one second mobile terminals until a waiting time reaches a maximum waiting time set according to a size of the to-be-downloaded file, or the number of the determined at least one second mobile terminals reaches a maximum number of the second mobile terminals set according to the size of the to-be-downloaded file (S202, S402).

3. The method according to claim 1 or 2, **characterized in that**, the request of dividing and downloading the to-be-downloaded file carries therein:
a proportional relation of sizes of the divided subfiles which is determined according to the size of the to-be-downloaded file as well as a device performance and a band width of the at least one second mobile terminal, and a download mapping relation between the divided subfiles and the at least one second mobile terminal which is determined according to the size of the to-be-downloaded file as well as the device performance and the band width of the at least one second mobile terminal; and
the sending (S102, S403) the request of dividing and downloading the to-be-downloaded file to the server, so that the server divides the to-be-downloaded file into a plurality of subfiles and sends the plurality of subfiles to said at least one second mobile terminal respectively, or respectively sends the plurality of subfiles to said at least one second mobile terminal and the first mobile terminal, is performed,
such that the server divides the to-be-downloaded file into a plurality of subfiles according to the proportional relation, and sends each subfile to the corresponding at least one second mobile terminal in the download mapping relation, the number of the subfiles being the same as the number of said at least one second mobile terminals.

4. The method according to any one of claims 1 to 3, **characterized in that**, when determining that the download speed of one second mobile terminal is too slow or determining that the connection between one second mobile terminal and the first mobile terminal is poor, the step of sending the instruction of terminating download to this second mobile terminal, and determining the subfile corresponding to this second mobile terminal, comprises:
determining (S301, S404) a download time of each said at least one second mobile terminal according to their device performance;
when determining that one second mobile terminal does not return a response of completing receiving within its download time, sending (S302, S405) a download progress inquiring request to this second mobile terminal; and
when receiving a response of too slow download speed sent by one second mobile terminal or not receiving a response sent by one second mobile terminal within a set time after the download progress inquiring request is sent to this second mobile terminal, sending an instruction of terminating download to this second mobile terminal, and determining the subfile corresponding to this second mobile terminal as a new to-be-downloaded file (S303, S406).

5. The method according to any one of claims 1 to 4, **characterized in that**, the acquiring (S103, S407) the subfile received by said at least one second mobile terminal that completes receiving of the subfile after the second mobile terminal completes receiving of the subfile, comprises:
after receiving a response of completing receiving sent by the at least one second mobile terminal, acquiring the subfile received by this second mobile terminal.

6. The method according to any one of claims 1 to 5, **characterized in that**, after all of the plurality of subfiles are acquired, the method further comprises:
sending a notification message carrying mobile terminal information corresponding to each subfile and an arrangement sequence of each subfile in the to-be-downloaded file to respective at least one second mobile terminal, wherein when determining that one second mobile terminal needs to receive the to-be-downloaded file, this second mobile terminal acquires all of the plurality of subfiles, merges the subfiles into one file and saves the file according to the notification message (S409).

7. A method for downloading a file, **characterized in that**, the method is applied in a second mobile terminal, comprising:
determining (S1201) a first mobile terminal connectable with the second mobile terminal that needs to download a file;
receiving (S1202) a subfile obtained by dividing a to-be-downloaded file and sent by a server after receiving a request of dividing and downloading the to-be-downloaded file, the request of dividing and downloading the to-be-downloaded file being sent by the first mobile terminal; and
after completing receiving of the subfile, sending (S1203) the received subfile to the first mobile terminal, wherein after all the subfiles are acquired, the first mobile terminal merges the subfiles into one file and saves the file, wherein when it is determined that a download speed of this second mobile terminal is too slow or that a connection between this second mobile terminal and said first mobile terminal is poor, receiving an instruction of terminating download from the first mobile terminal.

8. The method according to claim 7, **characterized in that**, the method further comprises:
receiving (S1301) a notification message carrying mobile terminal information corresponding to each subfile and an arrangement sequence of each subfile in the to-be-downloaded file sent by the first mobile terminal after all the subfiles are acquired;
when determining that the to-be-downloaded file needs to be received, acquiring (S1302) all the subfiles according to the notification message; and
merging the subfiles into one file and saving the file according to the notification message (S1303).

9. A first mobile terminal for downloading a file, **characterized in that**, the first mobile terminal comprises:
a first determination unit (501) configured to determine at least one second mobile terminal for receiving a file among a plurality of mobile terminals connectable therewith;
a first sending unit (502) configured to send a request of dividing and downloading a to-be-downloaded file to a server, so that the server divides the to-be-downloaded file into a plurality of subfiles and sends the plurality of subfiles to said at least one second mobile terminal respectively, or respectively sends the plurality of subfiles to said at least one second mobile terminal and the first mobile terminal each said second mobile terminal receiving part of said file to be downloaded;
said first mobile terminal being configured to, when determining that a download speed of one said second mobile terminal is too slow or that a connection between one said second mobile terminal and the first mobile terminal is poor, send an instruction of terminating download to this second mobile terminal, and determine the subfile corresponding to this second mobile terminal as a new to-be-downloaded file;
an acquisition unit (503) configured to, after said at least one second mobile terminal completes receiving of the subfile, acquire the subfile received by this second mobile terminal; and
a merging unit (504) configured to, after all of the plurality of subfiles are acquired, merge the subfiles into one file and save the file.

10. A second mobile terminal for downloading a file, **characterized in that**, the second mobile terminal comprises:
a determination unit (1401) configured to determine that a first mobile terminal connectable therewith needs to download a file;
a first receiving unit (1402) configured to receive subfiles obtained by dividing a to-be-downloaded file and sent by a server after receiving a request of dividing and downloading the to-be-downloaded file, the request of dividing and downloading the to-be-downloaded file being sent by the first mobile terminal; and
a file sending unit (1403) configured to, after completing receiving of the subfile, send the received subfile to the first mobile terminal, wherein after all the subfiles are acquired, the first mobile terminal merges the subfiles into one file and saves the file, the second mobile terminal being configured to, when the first mobile terminal determines that a download speed of the device is too slow or that a connection between the second mobile terminal and said first mobile terminal is poor, receive an instruction of terminating download from the first mobile terminal.

11. A system for downloading a file, **characterized in that**, the system comprises:
a first mobile terminal according to claim 9;
at least one second mobile termnal according to claim 10; and
a server (1602) configured to, after receiving a request for dividing and downloading a to-be-downloaded file from the first mobile terminal, divide the to-be-downloaded file into a plurality of subfiles and send the plurality of subfiles to said at least one second mobile terminal respectively, or respectively send the plurality of subfiles to said at least one second mobile terminal and the first mobile terminal, each said at least one second mobile terminal receiving part of said file to be downloaded.

## Patentansprüche

1. Verfahren zum Herunterladen einer Datei, **dadurch gekennzeichnet, dass** das Verfahren in einem ersten mobilen Endgerät, das eine Datei herunterladen muss, angewendet wird, umfassend:
Bestimmen (S101) unter einer Vielzahl von mobilen Endgeräten, die mit dem ersten mobilen Endgerät verbunden werden können, mindestens eines zweiten mobilen Endgerätes zum Empfangen einer Datei,
Senden (S102, S403) einer Anforderung zum Teilen und Herunterladen einer herunterzuladenden Datei an einen Server, so dass der Server die herunterzuladende Datei in eine Vielzahl von Teildateien teilt und die Vielzahl von Teildateien jeweils an das mindestens eine zweite mobile Endgerät sendet, oder jeweils die Vielzahl von Teildateien an das mindestens eine zweite mobile Endgerät und das erste mobile Endgerät sendet, wobei jedes zweite mobile Endgerät einen Teil der herunterzuladenden Datei empfängt,
wenn festgestellt wird, dass eine Download-Geschwindigkeit eines zweiten mobilen Endgerätes zu langsam ist oder dass eine Verbindung zwischen einem zweiten mobilen Endgerät und dem ersten mobilen Endgerät schlecht ist, Senden einer Anweisung zum Beenden des Downloads an dieses zweite mobile Endgerät und Bestimmen der Teildatei, die diesem zweiten mobilen Endgerät entspricht, als eine neue herunterzuladende Datei,
nachdem das mindestens eine zweite mobile Endgerät den Empfang der Teildatei abgeschlossen hat, Erlangen (S103, S407) der von diesem zweiten mobilen Endgerät empfangenen Teildatei, und
nachdem alle der Vielzahl von Teildateien erlangt wurden, Zusammenführen der Teildateien zu einer Datei und Speichern der Datei (S104, S408).

2. Verfahren nach Anspruch 1, **dadurch gekennzeichnet, dass** der Schritt des Bestimmens (S101) mindestens eines zweiten mobilen Endgerätes unter der Vielzahl von mobilen Endgeräten, die mit dem ersten mobilen Endgerät verbindbar sind, umfasst:
Senden (S201, S401) einer Download-Anforderung an entsprechende mobile Endgeräte, die mit dem ersten mobilen Endgerät verbindbar sind, und
Empfangen einer Antwort des Akzeptierens des Herunterladens, die von einem jeweiligen mobilen Endgerät gesendet wird, das mit dem ersten mobilen Endgerät verbindbar ist, und Bestimmen des mobilen Endgerätes, das die Antwort des Akzeptierens des Herunterladens sendet, als eines der mindestens einen zweiten mobilen Endgeräte, bis eine Wartezeit eine maximale Wartezeit erreicht, die entsprechend einer Größe der herunterzuladenden Datei eingestellt ist, oder die Anzahl der bestimmten mindestens einen zweiten mobilen Endgeräte eine maximale Anzahl von zweiten mobilen Endgeräte erreicht, die entsprechend der Größe der herunterzuladenden Datei eingestellt ist (S202, S402).

3. Verfahren nach Anspruch 1 oder 2, **dadurch gekennzeichnet, dass** die Anforderung des Teilens und Herunterladen der herunterzuladenden Datei beinhaltet:
eine proportionale Beziehung der Größen der unterteilten Teildateien, die gemäß der Größe der herunterzuladenden Datei sowie einer Geräteleistung und einer Bandbreite des mindestens einen zweiten mobilen Endgerätes bestimmt wird, und eine Download-Abbildungsbeziehung zwischen den unterteilten Teildateien und dem mindestens einen zweiten mobilen Endgerät, die gemäß der Größe der herunterzuladenden Datei sowie der Geräteleistung und der Bandbreite des mindestens einen zweiten mobilen Endgerätes bestimmt wird, und
Senden (S102, S403) der Anforderung des Teilens und Herunterladens der herunterzuladenden Datei an den Server, so dass der Server die herunterzuladende Datei in eine Vielzahl von Teildateien aufteilt und die Vielzahl von Teildateien jeweils an das mindestens eine zweite mobile Endgerät sendet, oder jeweils die Vielzahl von Teildateien an das mindestens eine zweite mobile Endgerät und das erste mobile Endgerät sendet,
so dass der Server die herunterzuladende Datei in eine Vielzahl von Teildateien entsprechend der proportionalen Beziehung unterteilt und jede Teildatei an das entsprechende mindestens eine zweite mobile Endgerät in der Download-Mapping-Beziehung sendet, wobei die Anzahl der Teildateien gleich der Anzahl der mindestens einen zweiten mobilen Endgeräte ist.

4. Verfahren nach einem der Ansprüche 1 bis 3, **dadurch gekennzeichnet, dass** beim Feststellen, dass die Geschwindigkeit des Herunterladens eines zweiten mobilen Endgerätes zu langsam ist oder beim Feststellen, dass die Verbindung zwischen einem zweiten mobilen Endgerät und dem ersten mobilen Endgerät schlecht ist, der Schritt des Sendens der Anweisung zum Beenden des Herunterladens an dieses zweite mobile Endgerät und des Bestimmens der diesem zweiten mobilen Endgerät entsprechenden Teildatei umfasst:
Bestimmen (S301, S404) einer Download-Zeit von jedem der mindestens einen zweiten mobilen Endgeräte entsprechend ihrer Geräteleistung,
wenn festgestellt wird, dass ein zweites mobiles Endgerät keine Antwort über den Abschluss des Empfangs innerhalb seiner Download-Zeit zurückgibt, Senden (S302, S405) einer Anforderung zur Abfrage des Download-Fortschritts an dieses zweite mobile Endgerät, und
wenn eine von einem zweiten mobilen Endgerät gesendete Antwort zu langsamer Download-Geschwindigkeit empfangen wird oder wenn eine von einem zweiten mobilen Endgerät gesendete Antwort nicht innerhalb einer festgelegten Zeit, nachdem die Anforderung zur Abfrage des Download-Fortschritts an dieses zweite mobile Endgerät gesendet wurde, empfangen wird, Senden einer Anweisung zum Beenden des Downloads an dieses zweite mobile Endgerät und Bestimmen der diesem zweiten mobilen Endgerät entsprechenden Teildatei als eine neue herunterzuladende Datei (S303, S406).

5. Verfahren nach einem der Ansprüche 1 bis 4, **dadurch gekennzeichnet, dass** das Erlangen (S103, S407) der Teildatei, die von dem mindestens einen zweiten mobilen Endgerät empfangen wurde, das den Empfang der Teildatei abschließt, nachdem das zweite mobile Endgerät den Empfang der Teildatei abgeschlossen hat, umfasst:
nach Erhalt einer Antwort über den Abschluss des Empfangs, die von dem mindestens einen zweiten mobilen Endgerät gesendet wurde, Erlangen der von diesem zweiten mobilen Endgerät empfangenen Teildatei.

6. Verfahren nach einem der Ansprüche 1 bis 5, **dadurch gekennzeichnet, dass** das Verfahren, nachdem alle der Vielzahl von Teildateien erlangt wurden, ferner umfasst:
Senden einer Benachrichtigungsnachricht, die Mobilendgerät-Informationen trägt, die jeder Teildatei und einer Anordnungssequenz jeder Teildatei in der herunterzuladenden Datei entsprechen, an jeweils mindestens ein zweites mobiles Endgerät, wobei, wenn bestimmt wird, dass ein zweites mobiles Endgerät die herunterzuladende Datei empfangen muss, dieses zweite Mobilendgerät alle der Vielzahl von Teildateien erlangt, die Teildateien zu einer Datei zusammenführt und die Datei gemäß der Benachrichtigungsnachricht speichert (S409).

7. Verfahren zum Herunterladen einer Datei, **dadurch gekennzeichnet, dass** das Verfahren in einem zweiten mobilen Endgerät angewendet wird, umfassend:
Bestimmen (S1201) eines ersten mobilen Endgeräts, das mit dem zweiten mobilen Endgerät, das eine Datei herunterladen muss, verbindbar ist,
Empfangen (S1202) einer Teildatei, die durch Teilen einer herunterzuladenden Datei erhalten und von einem Server gesendet wird, nachdem eine Anforderung zum Teilen und Herunterladen der herunterzuladenden Datei empfangen wurde, wobei die Anforderung zum Teilen und Herunterladen der herunterzuladenden Datei vom ersten mobilen Endgerät gesendet wurde, und
nach Beenden des Empfangens der Teildatei, Senden (S1203) der empfangenen Teildatei an das erste mobile Endgerät, wobei das erste mobile Endgerät, nachdem alle Teildateien erlangt wurden, die Teildateien zu einer Datei zusammenfügt und die Datei speichert, wobei, wenn festgestellt wird, dass eine Download-Geschwindigkeit dieses zweiten mobilen Endgerätes zu langsam ist oder dass eine Verbindung zwischen diesem zweiten mobilen Endgerät und dem ersten mobilen Endgerät schlecht ist, eine Anweisung zum Beenden des Downloads von dem ersten mobilen Endgerät empfangen wird.

8. Verfahren nach Anspruch 7, **dadurch gekennzeichnet, dass** das Verfahren ferner umfasst:
Empfangen (S1301) einer Benachrichtigungsnachricht, die Informationen über das mobile Endgerät, das jeder Teildatei entspricht, und eine Anordnungssequenz jeder Teildatei in der herunterzuladenden Datei enthält und die von dem ersten mobilen Endgerät gesendet wurde, nachdem alle Teildateien erlangt wurden,
beim Bestimmen, dass die herunterzuladende Datei empfangen werden muss, Erlangen (S1302) aller Teildateien gemäß der Benachrichtigungsnachricht, und
Zusammenführen der Teildateien zu einer Datei und Speichern der Datei entsprechend der Benachrichtigungsnachricht (S1303).

9. Erstes mobiles Endgerät zum Herunterladen einer Datei, **dadurch gekennzeichnet, dass** das erste mobile Endgerät umfasst:
eine erste Bestimmungseinheit (501), die dazu konfiguriert ist, unter einer Vielzahl von damit verbindbaren mobilen Endgeräten mindestens ein zweites mobiles Endgerät zum Empfangen einer Datei zu bestimmen,
eine erste Sendeeinheit (502), die dazu konfiguriert ist, eine Anforderung zum Teilen und Herunterladen einer herunterzuladenden Datei an einen Server zu senden, so dass der Server die herunterzuladende Datei in eine Vielzahl von Teildateien teilt und die Vielzahl von Teildateien an das mindestens eine zweite mobile Endgerät sendet bzw. die Vielzahl von Teildateien an das mindestens eine zweite mobile Endgerät und das erste mobile Endgerät sendet, wobei jedes zweite mobile Endgerät einen Teil der herunterzuladenden Datei empfängt,
wobei das erste mobile Endgerät dazu konfiguriert ist, wenn festgestellt wird, dass eine Download-Geschwindigkeit eines der zweiten mobilen Endgeräte zu langsam ist oder dass eine Verbindung zwischen einem der zweiten mobilen Endgeräte und dem ersten mobilen Endgerät schlecht ist, eine Anweisung zum Beenden des Downloads an dieses zweite mobile Endgerät zu senden und die Teildatei, die diesem zweiten mobilen Endgerät entspricht, als eine neue herunterzuladende Datei zu bestimmen,
eine Erlangungseinheit (503), die dazu konfiguriert ist, nachdem das mindestens eine zweite mobile Endgerät den Empfang der Teildatei abgeschlossen hat, die von diesem zweiten mobilen Endgerät empfangene Teildatei zu erlangen, und
eine Zusammenführungseinheit (504), die dazu konfiguriert ist, nachdem alle der Vielzahl von Teildateien erlangt wurden, die Teildateien zu einer Datei zusammenzuführen und die Datei zu speichern.

10. Zweites mobiles Endgerät zum Herunterladen einer Datei, **dadurch gekennzeichnet, dass** das zweite mobile Endgerät umfasst:
eine Bestimmungseinheit (1401), die dazu konfiguriert ist, zu bestimmen, dass ein erstes damit verbindbares mobiles Endgerät eine Datei herunterladen muss,
eine erste Empfangseinheit (1402), die dazu konfiguriert ist, Teildateien zu empfangen, die durch Teilen einer herunterzuladenden Datei erhalten und von einem Server gesendet wurden, nachdem eine Anforderung zum Teilen und Herunterladen der herunterzuladenden Datei empfangen wurde, wobei die Anforderung zum Teilen und Herunterladen der herunterzuladenden Datei von dem ersten mobilen Endgerät gesendet wurde, und
eine Dateisendeeinheit (1403), die dazu konfiguriert ist, nach Abschluss des Empfangens der Teildatei die empfangene Teildatei an das erste mobile Endgerät zu senden, wobei das erste mobile Endgerät, nachdem alle Teildateien erlangt wurden, die Teildateien zu einer Datei zusammenfügt und die Datei speichert, wobei das zweite mobile Endgerät dazu konfiguriert ist, wenn das erste mobile Endgerät feststellt, dass eine Download-Geschwindigkeit des Geräts zu langsam ist oder dass eine Verbindung zwischen dem zweiten mobilen Endgerät und dem ersten mobilen Endgerät schlecht ist, eine Anweisung zum Beenden des Downloads von dem ersten mobilen Endgerät zu empfangen.

11. System zum Herunterladen einer Datei, **dadurch gekennzeichnet, dass** das System umfasst:
ein erstes mobiles Endgerät nach Anspruch 9,
mindestens ein zweites mobiles Endgerät nach Anspruch 10 und
einen Server (1602), der dazu konfiguriert ist, nach dem Empfangen einer Anforderung zum Teilen und Herunterladen einer herunterzuladenden Datei von dem ersten mobilen Endgerät die herunterzuladende Datei in eine Vielzahl von Teildateien aufzuteilen und die Vielzahl von Teildateien jeweils an das mindestens eine zweite zweite mobile Endgerät zu senden, oder die Vielzahl von Teildateien jeweils an das mindestens eine zweite mobile Endgerät und das erste mobile Endgerät zu senden, wobei jedes der mindestens einen zweiten mobilen Endgeräte einen Teil der herunterzuladenden Datei empfängt.

## Revendications

1. Procédé permettant de télécharger un fichier, **caractérisé en ce que** le procédé est appliqué dans un premier terminal mobile qui a besoin de télécharger un fichier, comprenant :
la détermination (S101) d'au moins un deuxième terminal mobile destiné à recevoir un fichier parmi une pluralité de terminaux mobiles pouvant être connectés au premier terminal mobile ;
l'envoi (S102, S403) à un serveur d'une demande de division et de téléchargement d'un fichier à télécharger de sorte que le serveur divise le fichier à télécharger en une pluralité de sous-fichiers et envoie la pluralité de sous-fichiers audit deuxième terminal mobile au moins au nombre de un respectivement, ou respectivement envoie la pluralité de sous-fichiers audit deuxième terminal mobile au moins au nombre de un et au premier terminal mobile, chaque dit deuxième terminal mobile recevant une partie dudit fichier à télécharger,
lors de la détermination qu'une vitesse de téléchargement dudit deuxième terminal mobile est trop faible ou qu'une connexion entre ledit deuxième terminal mobile et le premier terminal mobile est médiocre, l'envoi à ce deuxième terminal mobile d'une instruction visant à mettre fin au téléchargement, et la détermination du sous-fichier correspondant à ce deuxième terminal mobile en tant que nouveau fichier à télécharger,
après que ledit deuxième terminal mobile au moins au nombre de un achève la réception du sous-fichier, l'acquisition (S103, S407) du sous-fichier reçu par ce deuxième terminal mobile ; et
après l'acquisition de la totalité des sous-fichiers, la fusion des sous-fichiers en un fichier et sauvegarde du fichier (S104, S408).

2. Procédé selon la revendication 1, **caractérisé en ce que** l'étape de détermination (S101) d'au moins un deuxième terminal mobile parmi la pluralité de terminaux mobiles pouvant être connectés au premier terminal mobile comprend :
l'envoi (S201, S401) d'une demande de téléchargement à des terminaux mobiles respectifs pouvant être connectés au premier terminal mobile ; et
la réception d'un réponse d'acceptation du téléchargement envoyée par le terminal mobile respectif pouvant être connecté au premier terminal mobile, et la détermination du terminal mobile envoyant la réponse d'acceptation du téléchargement en tant que l'un desdits deuxièmes terminaux mobiles au moins au nombre de un jusqu'à ce qu'un temps d'attente atteigne un temps d'attente maximum fixé conformément à une taille du fichier à télécharger, ou jusqu'à ce que le nombre de deuxièmes terminaux mobiles au moins au nombre de un déterminés atteigne un nombre maximal de deuxièmes terminaux mobiles fixé conformément à la taille du fichier à télécharger (S202, S402).

3. Procédé selon la revendication 1 ou 2, **caractérisé en ce que** la demande de division et de téléchargement du fichier à télécharger comporte ce qui suit :
une relation proportionnelle de tailles des sous-fichiers divisés qui est déterminée conformément à la taille du fichier à télécharger ainsi qu'à une performance du dispositif et à une largeur de bande du deuxième terminal mobile au moins au nombre de un, et une relation de mappage de téléchargement entre les sous-fichiers divisés et le deuxième terminal mobile au moins au nombre de un qui est déterminée conformément à la taille du fichier à télécharger ainsi qu'à la performance du dispositif et à la largeur de bande du deuxième terminal mobile au moins au nombre de un ; et
l'envoi (S102, S403) au serveur de la demande de division et de téléchargement du fichier à télécharger de sorte que le serveur divise le fichier à télécharger en une pluralité de sous-fichiers et envoie la pluralité de sous-fichiers audit deuxième terminal mobile au moins au nombre de un respectivement, ou respectivement envoie la pluralité de sous-fichiers audit deuxième terminal mobile au moins au nombre de un et au premier terminal mobile, est effectué,
de sorte que le serveur divise le fichier à télécharger en une pluralité de sous-fichiers conformément à la relation proportionnelle, et envoie chaque sous-fichier au deuxième terminal mobile au moins au nombre de un correspondant dans la relation de mappage de téléchargement, le nombre de sous-fichiers étant identique au nombre de dits deuxièmes terminaux mobiles au moins au nombre de un.

4. Procédé selon l'une quelconque des revendications 1 à 3, **caractérisé en ce que**, lors de la détermination que la vitesse de téléchargement d'un deuxième terminal mobile est trop faible ou de la détermination que la connexion entre un deuxième terminal mobile et le premier terminal mobile est médiocre, l'étape d'envoi à ce deuxième terminal mobile de l'instruction de mettre fin au téléchargement et de détermination du sous-fichier correspondant à ce deuxième terminal mobile comprend :
la détermination (S301, S404) d'un temps de téléchargement de chaque dit deuxième terminal mobile au moins au nombre de un conformément à leur performance de dispositif ;
lors de la détermination qu'un deuxième terminal mobile ne renvoie pas de réponse d'achever la réception à l'intérieur de son temps de téléchargement, l'envoi (S302, S405) à ce deuxième terminal mobile d'une demande d'examen de la progression du téléchargement ; et
lors de la réception d'une réponse de vitesse de téléchargement trop faible envoyée par un deuxième terminal mobile ou lors de la non-réception d'une réponse envoyée par un deuxième terminal mobile à l'intérieur d'un temps fixé après que la demande d'examen de progression du téléchargement est envoyée à ce deuxième terminal mobile, l'envoi à ce deuxième terminal mobile d'une instruction de mettre fin au téléchargement, et la détermination du sous-fichier correspondant à ce deuxième terminal mobile en tant que nouveau fichier à télécharger (S303, S406).

5. Procédé selon l'une quelconque des revendications 1 à 4, **caractérisé en ce que** l'acquisition (S103, S407) du sous-fichier reçu par ledit deuxième terminal mobile au moins au nombre de un qui achève la réception du sous-fichier après que le deuxième terminal mobile achève la réception du sous-fichier, comprend :
après la réception d'une réponse d'achèvement de la réception envoyée par le deuxième terminal mobile au moins au nombre de un, l'acquisition du sous-fichier reçu par ce deuxième terminal mobile.

6. Procédé selon l'une quelconque des revendications 1 à 5, **caractérisé en ce que**, après l'acquisition de la totalité de la pluralité de sous-fichiers, le procédé comprend également :
l'envoi au deuxième terminal mobile au moins au nombre de un respectif d'un message de notification portant des informations de terminal mobile correspondant à chaque sous-fichier et d'une séquence d'agencement de chaque sous-fichier dans le fichier à télécharger, dans lequel, lors de la détermination qu'un deuxième terminal mobile a besoin de recevoir le fichier à télécharger, ce deuxième terminal mobile acquiert la totalité de la pluralité de sous-fichiers, fusionne les sous-fichiers en un fichier et sauvegarde le fichier conformément au message de notification (S409).

7. Procédé de téléchargement d'un fichier, **caractérisé en ce que** le procédé est appliqué dans un deuxième terminal mobile, comprenant :
la détermination (S1201) d'un premier terminal mobile pouvant être connecté au deuxième terminal mobile qui a besoin de télécharger un fichier ;
la réception (S1202) d'un sous-fichier obtenu en divisant un fichier à télécharger et envoyé par un serveur après la réception d'une demande de division et de téléchargement du fichier à télécharger, la demande de division et de téléchargement du fichier à télécharger étant envoyée par le premier terminal mobile ; et,
après l'achèvement de la réception du sous-fichier, l'envoi (S1203) du sous-fichier reçu au premier terminal mobile, dans lequel après l'acquisition de tous les sous-fichiers, le premier terminal mobile fusionne les sous-fichiers en un fichier et sauvegarde le fichier, dans lequel, quand il est déterminé qu'une vitesse de téléchargement de ce deuxième terminal mobile est trop faible ou qu'une connexion entre le deuxième terminal mobile et ledit premier terminal mobile est médiocre, la réception d'une instruction de mettre fin au téléchargement en provenance du premier terminal mobile.

8. Procédé selon la revendication 7, **caractérisé en ce que** le procédé comprend également :
la réception (S1301) d'un message de notification portant des informations de terminal mobile correspondant à chaque sous-fichier et une séquence d'agencement de chaque sous-fichier dans le fichier à télécharger envoyé par le premier terminal mobile après l'acquisition de tous les sous-fichiers ; lors de la détermination que le fichier à télécharger a besoin d'être reçu, l'acquisition (S1302) de tous les sous-fichiers conformément au message de notification ; et
la fusion des sous-fichiers en un fichier, et la sauvegarde du fichier conformément au message de notification (S1303).

9. Premier terminal mobile permettant de télécharger un fichier, **caractérisé en ce que** le premier terminal mobile comprend :
une première unité de détermination (501) configurée pour déterminer au moins un deuxième terminal mobile destiné à recevoir un fichier parmi une pluralité de terminaux mobiles qui peuvent lui être connectés ;
une première unité d'émission (502) configurée pour envoyer à un serveur une demande de division et de téléchargement d'un fichier à télécharger de sorte que le serveur divise le fichier à télécharger en une pluralité de sous-fichiers et envoie la pluralité de sous-fichiers audit deuxième terminal mobile au moins au nombre de un respectivement, ou respectivement envoie la pluralité de sous-fichiers audit deuxième terminal mobile au moins au nombre de un et au premier terminal mobile, chaque dit deuxième terminal mobile recevant une partie dudit fichier à télécharger ;
ledit premier terminal mobile étant configuré pour, lors de la détermination qu'une vitesse de téléchargement d'un dit deuxième terminal mobile est trop faible ou qu'une connexion entre un dit deuxième terminal mobile et le premier terminal mobile est médiocre, envoyer à ce deuxième terminal mobile une instruction de mettre un terme au téléchargement, et pour déterminer le sous-fichier correspondant à ce deuxième terminal mobile en tant que nouveau fichier à télécharger ;
une unité d'acquisition (503) configurée pour, après que ledit deuxième terminal mobile au moins au nombre de un achève la réception du sous-fichier, acquérir le sous-fichier reçu par ce deuxième terminal mobile ; et
une unité de fusion (504) configurée pour, après l'acquisition de la totalité de la pluralité de sous-fichiers, fusionner les sous-fichiers en un fichier et pour sauvegarder le fichier.

10. Deuxième terminal mobile permettant de télécharger un fichier, **caractérisé en ce que** le deuxième terminal mobile comprend :
une unité de détermination (1401) configurée pour déterminer qu'un premier terminal mobile qui peut lui être connecté a besoin de télécharger un fichier ;
une première unité de réception (1402) configurée pour recevoir des sous-fichiers obtenus en divisant un fichier à télécharger et envoyé par un serveur après la réception d'une demande de division et de téléchargement du fichier à télécharger, la demande de division et de téléchargement du fichier à télécharger étant envoyée par le premier terminal mobile ; et
une unité d'envoi de fichier (1403) configurée pour, après l'achèvement de la réception du sous-fichier, envoyer le sous-fichier reçu au premier terminal mobile, dans lequel, après l'acquisition de tous les sous-fichiers, le premier terminal mobile fusionne les sous-fichiers en un fichier et sauvegarde le fichier, le deuxième terminal mobile étant configuré pour, quand le premier terminal mobile détermine qu'une vitesse de téléchargement du dispositif est trop faible ou qu'une connexion entre le deuxième terminal mobile et ledit premier terminal mobile est médiocre, recevoir du premier terminal mobile une instruction de mettre un terme au téléchargement.

11. Système permettant de télécharger un fichier, **caractérisé en ce que** le système comprend :
un premier terminal mobile selon la revendication 9 ;
au moins un deuxième terminal mobile selon la revendication 10 ; et
un serveur (1602) configuré pour, après la réception en provenance du premier terminal mobile d'une demande de division et de téléchargement d'un fichier à télécharger, diviser le fichier à télécharger en une pluralité de sous-fichiers et pour envoyer la pluralité de sous-fichiers audit deuxième terminal mobile au moins au nombre de un respectivement, ou respectivement pour envoyer la pluralité de sous-fichiers audit deuxième terminal mobile au moins au nombre de un et au premier terminal mobile, chaque dit deuxième terminal mobile au moins au nombre de un recevant une partie dudit fichier à télécharger.
